Europäisches Patentamt

European Patent Office

Office européen des brevets

(19)

(11) Publication number: **0 165 762**
**A1**

(12) # EUROPEAN PATENT APPLICATION

(21) Application number: **85304153.1**

(22) Date of filing: **12.06.85**

(51) Int. Cl.⁴: **B 23 K 37/02**

(30) Priority: **19.06.84 US 622293**

(43) Date of publication of application:
**27.12.85 Bulletin 85/52**

(84) Designated Contracting States:
**DE FR GB IT SE**

(71) Applicant: **UNIMATION INC.**
**Shelter Rock Lane**
**Danbury Connecticut 06810(US)**

(72) Inventor: **Swensrud, Roger Lee**
**1150 O'Block Road**
**Pittsburgh Pennsylvania(US)**

(72) Inventor: **Stoutamire, Mark Steven**
**732 Orchard Street**
**Carnegie Pennsylvania(US)**

(72) Inventor: **Swartzbeck, Gary William**
**11509 Drop Road**
**N. Huntingdon Pennsylvania(US)**

(74) Representative: **van Berlyn, Ronald Gilbert**
**23, Centre Heights**
**London, NW3 6JG(GB)**

(54) Improved wrist and post for robots performing welding.

(57) An improved welding torch wrist and improved elongated axis post member for use with an industrial manipulator or the like. The welding torch wrist includes a housing adapted to be mounted onto the industrial manipulator, a torch holding member which is operably associated with the housing for controlled movement about a first axis through a predetermined arc of travel and a drive means mounted in the housing for effecting the aforedesribed controlled movement. The drive means is mounted radially disposed relative to the arc of travel of the torch holding means. The improved axis post provides extended welding capabilities to the improved wrist by permitting deep vessel welding operations.

./...

FIG. 2

1

## IMPROVED WRIST AND POST FOR
## ROBOTS PERFORMING WELDING

Field of the Invention:

The invention relates to industrial automation in general and industrial manipulators adapted for welding applications in particular. The improved wrist of this invention is designed with the objective of minimizing size and greatly increasing access to weld seam locations while maintaining all of the necessary and desirable tracking capability of a welding wrist. The improved post of this invention by which the wrist can be supported from the industrial manipulator is designed to allow welding applications inside of deep vessels.

## BACKGROUND OF THE INVENTION

The use of robots in arc welding has been and continues to be a significant component of programs dedicated to industrial automation. A particularly attractive feature of robotic welding consists in the fact that it represents true human replacement, and as such, handles standard arc welding equipment to do the job. For very basic applications, all that is needed is a fitment to mount the welding gun which is attached to its long gas lines and wire feed mechanisms, onto the robot's hand. All other equipment associated with the arc welder will then operate in a normal fashion as if being manipulated by human operators. The task performed by the robot is mainly to guide the arc welding gun around the programmed path and to signal when it is on station and ready to proceed. The welding unit controller does the rest. However, despite the apparent simplicity involved in moving a welding gun around a given path, arc welding, even by robots, is a very difficult tasks and presents significant challenges in the design of a robot.

The wrist which supports the welding torch must meet certain requirements in order to adequately carry out the welding operation. For example, in weld tracking operations there is a need for the wrist to provide an oscillation weave of about 3 to 5 millimeters at a frequency of between about 3 to 5 hertz. Such oscillation is typically affected through the use of a DC servomotor and harmonic drive unit which are disposed at a 90° angle relative to the welding gun tip. Such a direct drive coupling between the fitment supporting the welding gun and the drive mechanism renders a welding torch supporting wrist which tends to be of a size which limits access to weld seam locations.

In addition to the size of the supporting wrist, another significant problem in conventional automated welding systems resides in the axis post that supports the wrist and connects the wrist to the main body of the industrial manipulator. The length and configuration of the axis post in combination with the wrist used therewith have direct impact on the welding capabilities of the automated device and the accessibility of that device to a given job. Heretofore, the results have been that welding can be accomplished, for example, within the inner surface of a vessel. However, the size of the vessel in which welding operations can be affected is limited by both the length and configuration of the post and the configuration of the wrist. Additionally, the weave speed of 3 to 5 hertz necessary for certain arc welding operations generates deflection in the post due to a fundamental natural frequency at or near the weave speed. Thus rather than simply being a matter of upscaling the access post of a welding unit by increasing its length, serious attention to

3                    **0165762**

the large deflections developing therein during welding operations must be addressed.

It is therefore an object of this invention to provide a wrist for use in welding applications which is of a minimum size and greatly increases access to weld seam locations while maintaining all of the necessary wrist tracking capabilities.

This invention provides an improved axis post which accommodates the aforedescribed wrist and also permits welding inside of deep vessels which had previously been inaccessible to automated welding apparatus.

SUMMARY OF THE INVENTION

The invention in its broad form comprises an improved welding torch wrist for use with an industrial manipulator or the like, comprising: a housing means adapted to be mounted onto the industrial manipulator; a torch-holding means operably associated with said housing means and mounted for controlled movement about a first axis through a predetermined arc of travel; and a drive means for effecting said controlled movement operatively associated with said torch-holding means, said drive means being mounted in said housing so as to be radially disposed relative to said arc of travel of said torch-holding means.

A preferred embodiment described herein provides an improved robotic wrist for use in combination with a welding torch. The wrist comprises a housing which is adapted to be mounted onto an industrial manipulator. The housing includes a torch holding means operably associated therewith for controlled movement about a first axis through a predetermined arc of travel. The housing further includes a drive means for affecting the controlled movement of the torch holding means. The drive means is mounted in the housing so as to be radially disposed relative to the arc of travel of the torch holding means. While the wrist alone provides a significant contribution to the arc of automated arc welding, the wrist can be used in combination with an improved axis post which supports the wrist. The axis post is characterized by a minimum width and depth while having enough length to weld both the bottom and top of the inside and outside of a very deep vessel.

## BRIEF DESCRIPTION OF THE DRAWINGS

A more detailed understanding of the invention may be had from the following description of a preferred embodiment given by way of example and to be studied in conjunction with the accompanying drawing in which:

Figure 1 is a perspective view of an industrial robot designed for arc welding applications and including the axis post and welding torch wrist according to the teachings of this invention;

Figure 2 is a somewhat schematical representation of an industrial robot utilizing the post and wrist of this invention for deep vessel welding applications;

Figure 3 is a cross-sectional view of the wrist of this invention illustrating the drive means thereof;

Figure 4 illustrates in perspective view the improved extended axis post of this invention; and

Figure 5 is a graph demonstrating the stiffness characteristics of the improved post through torch tip deflection as a function of the weave frequency of the torch mounted wrist.

## DETAILED DESCRIPTION OF THE INVENTION

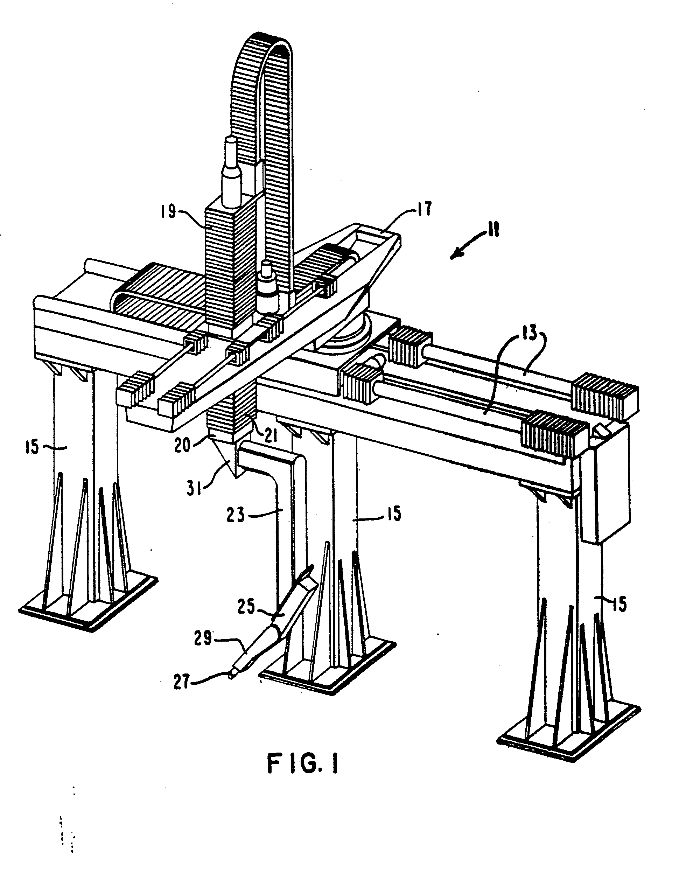

The improved wrist and axis post designed to accommodate this wrist can be used in combination with any of several commercially available industrial robots. Accordingly, it is to be appreciated that the industrial robot described herein is for illustrative purposes only and is by no means to be construed as limiting the application of the wrist and/or axis post of this invention. Turning to Figure 1, an industrial robot designed for arc welding, burning, light machining, heavy assembly and material handling applications is generally indicated by the reference character 11. This industrial robot 11 is commercially available from Westinghouse Electric Corporation and is known as the Series 6000 robot. This industrial manipulator is a gantry type design with an overhead "X" axis defined by rails 13 which are supported by vertical structural members or columns 15. The "Y" axis extends from the "X" axis and consists of a pivotable arm member 17. The arm 17 supports the vertical "Z" axis consisting of member 19. This orthogonal configuration delivers travel along the "X" axis, along the Y axis and vertical travel along the "Z" axis, providing an extended working envelope. All axes are driven by DC servomotors with position feedback in a closed loop system.

The free end 21 of the arm 19 supports an improved axis post with wrist mounted thereon incorporating the teachings of this invention. The post 23 depends downwardly from the free end 21 of the arm and is rotatably movable relative to the free end of the arm by means of a writs 20. The improved wrist 25 is mounted on the opposite end of the post 23 and supports a welding torch 27 by means of a pivotable welding torch support housing 29.

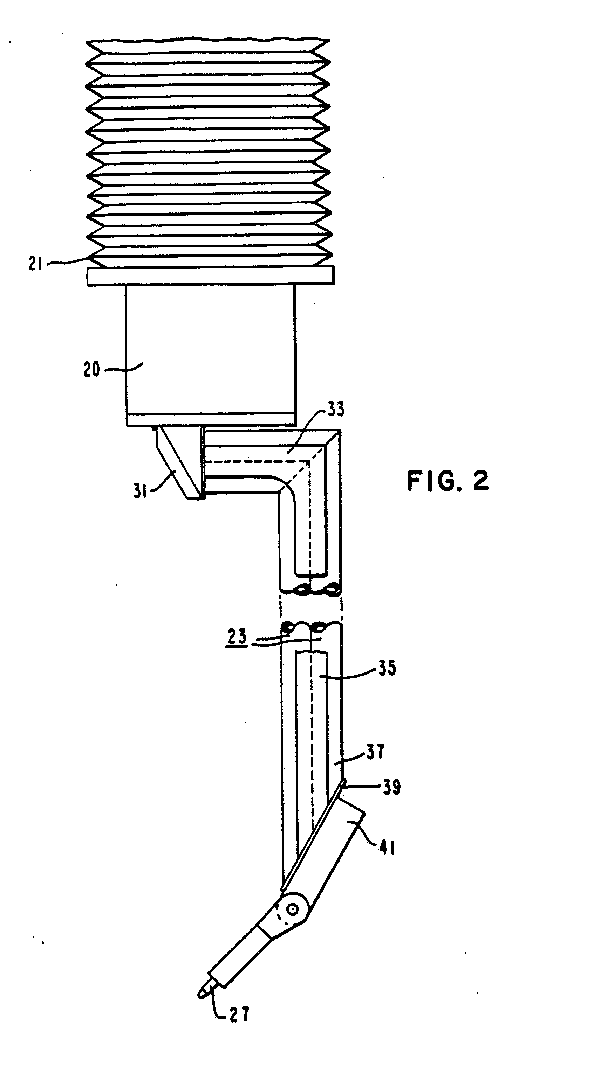

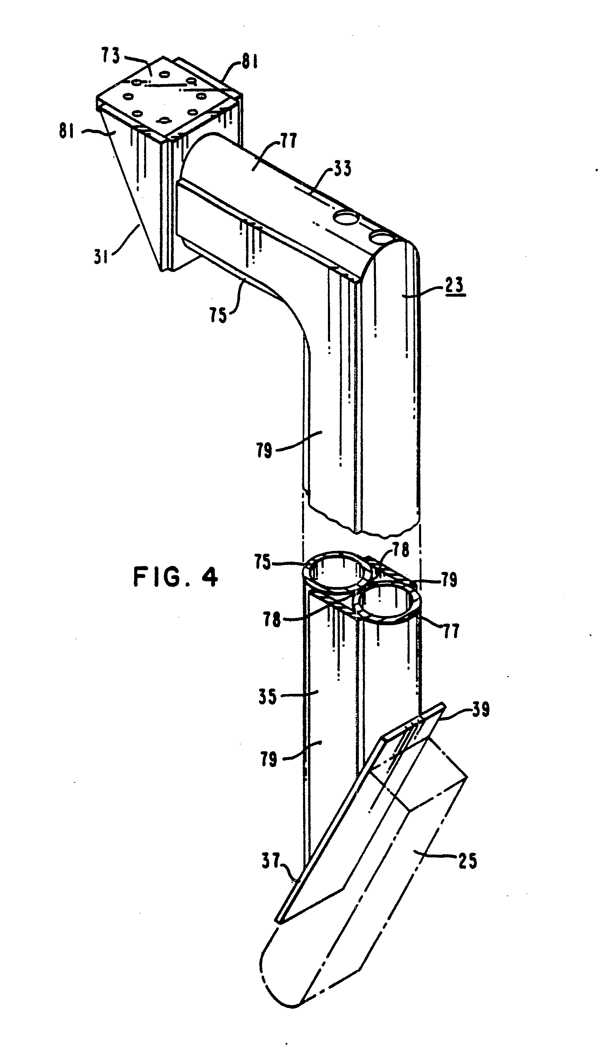

As can be seen in Figure 2, the improved wrist and axis post of this invention greatly increase access to weld seam locations which had been inaccessible to conventional automated welding configurations. The post 23 is generally S-shaped in configuration having a first portion 31 which is axially aligned with the Z axis and would be supported within the robot wrist, or secured thereto. The center or second portion 33 of the S-shaped post 23 is substantially perpendicular to the first section 31 and serves to radially space the elongated portion of the post 35 relative to the Z axis. The elongated portion 35 and the mounting portion 31 of the S axis post 23 are substantially parallel with respect to each other. The end 37 of the post 23 distal from the robot manipulator arm 19 has a seat 39 thereon. A wrist housing 41 is adapted to be mounted onto the seat 39 so that the torch 27 can be oriented to intersect the Z axis. The S axis post will be described in detail below in conjunction with Figure 4.

A sectional view of the wrist 25 is presented in Figure 3 and illustrates the major components of the wrist assembly. The wrist housing 41 which as described above is mounted to the post, contains the drive means generally indicated by the reference character 45. A torch housing or torch holding means 29 is pivotably mounted onto the housing 41 about a first axis 47 shown in dash-duct line. The torch housing means 29 is adapted to securely receive therein a welding torch 27 (see Figures 1 and 2). The torch housing 29 is fixedly mounted to shaft 49 which extends through the wrist housing 41. The controlled pivotal movement of the torch housing necessary to locate the torch in the desired position as well as to affect torch tip weave is communicated from the drive means 45 by means of first and second bevel gears 51 and 53. The first bevel gear 51 is on the output shaft 55 of the drive means 45. The second bevel gear 53 is fixedly mounted by a key or the like, onto shaft 49 and consists of a spring loaded split bevel antibacklash gear. The use of such a gearing system in the drive train overcomes a limitation typically found in torch wrist designs. The transmission of torque motion through the use of gears, even precision gears, creates a problem of backlash or lost motion which is communicated to the torch tip. Precision welding requirements dictate that lost motion be reduced to approximately 8 mils or .2 millimeters per weave. Consequently, prior art wrist designs required that the portion of the wrist which supported the torch be directly coupled to the output shaft of the drive means. While such a direct drive configuration minimized the lost motion problem, it did create significant problems in terms of both overall wrist size and correspondingly decreased access to weld seam locations. The present invention on the other hand, reduces the overall width of the wrist to approximately 2½ inches by turning the shaft torque motion 90 degrees with respect to conventional configurations. This is accomplished by using the aforedescribed pair of bevel gears.

The drive means preferably comprises a DC servomotor 59 coupled at 69 to a harmonic drive unit 61 which provides the desired gear reduction ratio. The motion required to affect both torch positioning and torch tip weave is produced by these drive means 45. The harmonic drive unit 61 consisting of a wave generator 63, a circular spline 65 and a flexible spline 67, is secured within the wrist housing 41 which functions as a torque tube. The circular spline 65 is attached to the housing 41 and the flexible spline 67 is attached to a drive shaft 55 which is coupled to the first bevel gear 51. The circular spline is tightened into place so that relative motion between the circular spline and the housing 41 is essentially eliminated.

While the combination of the output shaft, the harmonic drive unit, the motor shaft coupled to the harmonic drive unit and the fixed coupling therebetween establish the spring rate of the apparatus, the stiff design of all but the harmonic drive unit results in the harmonic drive unit being the major contributor to the spring rate. The frictional forces of the preloaded bearing set 71 is selected to be less than the positioning force resulting from the windup of the harmonic drive unit. The selection of bearing preload and friction maintains the system accuracy and repeatability within minimum deflection.

The harmonic drive unit is emersed in a lubricant bath. The flexing motion of the flexible spline 67 effectively "pumps" the lubricant throughout the harmonic drive unit in order to remove heat and prevent undesired pressure buildup. Such harmonic drive units are known in the art and are readily available through commercial sources.

The aforedescribed trimline wrist of this invention can be used in combination with any available robotic system to enhance that system's welding capabilities. To provide even greater flexibility and added capabilities to a robotic system this trimline wrist can be used in combination with the S axis post of this invention.

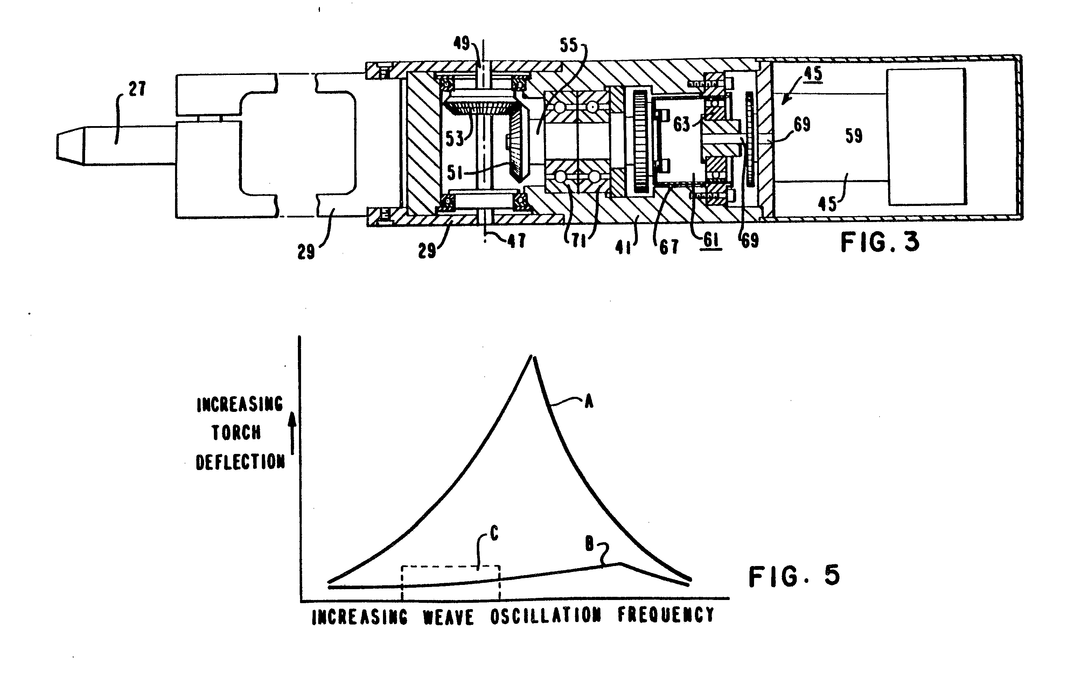

Considering Figures 4 and 5, the structure and method of fabrication for the elongated S post 23 can be fully appreciated. The post 23 includes an elongated portion 35 extending between the wrist seat 39 and a dog leg or portion 33 which radially spaces the elongated portion from the Z axis onto which the post is mounted. The first portion 31 of the elongated post can either be a mounting bracket as at 73 which is secured to the bottom or free end of the robot's wrist 20 or an integral shaft portion which is mounted within the robot. A bracked 39 adapted to mountably receive thereon the trim line wrist 25, an end effector or the like is angularly disposed thereon. In any event the construction of sections 33 and 35 of the post is the important factor in the elongated post's capabilities. Sections 33 and 35 of the post consist of thin walled tubing. Two lengths of tubing 75 and 77 are welded together as at 78 along with side plates 79 and gussets 81 to provide the desired post stiffness in the primary forcing function direction. Considering the dog leg portion 33, the tubing members 75 and 77 are vertically stacked and welded together at coincident surfaces. The side plates 79 which provide additional stiffness, are welded to both sides of the previously welded tubes 75 and 77 and extend along the portion 33 and preferably, a significant length of portion 35. Gussets 81 provide support to the "L"-shaped mounting bracket 73 by which the post is connected to the robot's wrist 20. The use of several gussets provides enhanced structural integrity while minimizing the increase to post weight. This post configuration was proven by test. As can be seen in the graph of Figure 5, the plot marked A shows the displacement of a post system using only the thin walled tubing. On the other hand, the plot marked B illustrates a post according to this invention which includes two thin walled tubes along with side plates and gussets. The acceptable range of torch deflection and desired weave oscillation frequency are shown on the graph at C. As can be seen the preferred embodiment shows virtually no appreciable weave displacement at desired operational weave frequencies. Moreover only moderate displacement is noted at significantly increased weave frequencies. On the other hand, significant displacement is noticed in the A plot even at moderately low weave frequencies. The preferred post is characterized by its stiffness and its very light weight structure. These characteristics are required so that low-beam type natural frequencies can be avoided. Otherwise, torch tip oscillation during welding will excite post wrist natural frequencies that are at or near the forcing frequency resulting in large unacceptable torch type deflections or displacement. Since the forcing frequency is relatively low, to be successful the post wrist assembly fundamental natural frequency must be relatively high, that is above maximum acceptable weave frequencies. However, post weight must be minimized in order to comply with the capabilities of the robot being used. Thus using the design described above, the natural frequency of the thin walled tubing was moved from unacceptable ranges and the amplitude at resonance was reduced from .25 to .020 inches. At the typical 5 hertz operating frequency the wrist and post are relatively still and well within acceptable limits of torch tip deflection.

What has been described is an improved trimlined wrist for welding applications and extended "S" axis post for use in mounting that wrist to an industrial manipulator. The improved wrist is approximately 2½ inches wide which when coupled with a 10 degree torch lead into and out of each 90 degree radius corner, allows welding of an inside 1 inch radius inside of a 16 inch square vessel. The improved S axis post facilitates welding inside of deep vessels.

10

CLAIMS:

1. An improved welding torch wrist for use with an industrial manipulator or the like, comprising:

a housing means adapted to be mounted onto the industrial manipulator;

a torch-holding means operably associated with said housing means and mounted for controlled movement about a first axis through a predetermined arc of travel; and

a drive means for effecting said controlled movement operatively associated with said torch-holding means, said drive means being mounted in said housing so as to be radially disposed relative to said arc of travel of said torch-holding means.

2. The improved welding torch wrist according to claim 1 wherein the torch holding means is operably associated with the housing means by means of a shaft to which said torch holding means is fixedly secured, said shaft being rotatably mounted in said housing means.

3. The improved welding torch wrist according to claim 2 wherein the drive means is operatively associated with the torch holding means by means of a first and second bevel gear means.

4. The improved welding torch wrist according to claim 2 wherein one of the bevel gears is a spring loaded split bevel antibacklash gear.

5. The improved welding torch wrist according to claim 2 wherein the drive means is operably associated with the torch holding means by means of a **first** bevel gear operably associated with an output shaft **of the** drive means and a second bevel gear fixedly secured **to the shaft** and in communication with said first bevel gear.

6.    The improved welding torch **wrist according to** claim 5 wherein one of the bevel gears **is a spring** loaded split bevel antibacklash gear.

7.    The improved welding torch **wrist according to** claim 6 wherein the second bevel gear **is a split** bevel gear.

8.    The improved welding torch **wrist according to** claim 1 wherein the drive means includes **a DC servomotor** coupled to a harmonic drive unit.

9.    The improved welding torch **wrist according to** claim 1 in combination with an industrial manipulator having a "Z" axis and including an **extended** axis post mounted on said manipulator, which post **comprises** a first portion which is substantially perpendicular to said "Z" axis and a second elongated portion which **is substantially** parallel to said "Z" axis whereby said **elongated** portion rotates about said "Z" axis in a radially spaced relationship relative thereto, and wherein the **housing** means of said wrist is mounted onto the free **end of said** extended post such that the torch holding means **of said** wrist is oriented toward said "Z" axis.

10.    The improved welding **torch according to** claim 9 wherein the extended axis post **includes** a pair of thin walled tube members welded together **and side plates** secured to said welded tube members to **increase the rigidity** thereof, said side plates extending **along both sides of** the first portion and along at least a **substantial** portion of the elongated portion.

11.    The improved welding **torch according to** claim 10 wherein the extended axis **post includes** an "L"-shaped mounting bracket by which **said post is** mounted onto the industrial manipulator and **wherein said** mounting

12

**0165762**

bracket is reinforced with at least two gusset means secured thereto.

FIG. I

FIG. 2

2/4

0165762

FIG. 4

FIG. 3

FIG. 5

INCREASING TORCH DEFLECTION

INCREASING WEAVE OSCILLATION FREQUENCY

4/4

0165762

**European Patent Office**

## EUROPEAN SEARCH REPORT

| | DOCUMENTS CONSIDERED TO BE RELEVANT | | EP 85304153.1 |
|---|---|---|---|

| Category | Citation of document with indication, where appropriate, of relevant passages | Relevant to claim | CLASSIFICATION OF THE APPLICATION (Int Cl 4) |
|---|---|---|---|
| X | DE - A1 - 2 920 768 (NISSAN) <br> * Fig. 7 * | 1-3;5 | B 23 K 37/02 |
| X | GB - A - 1 511 609 (AKERS) <br> * Fig. 1, pos. 18,23 * | 1-3;5 | |
| A | US - A - 4 229 641 (IHARA) <br> * Fig. 1, pos. 26 * | 9,11 | |
| A | DE - A1 - 3 037 758 (USM CORP.) <br> * Fig. 1 * | 8 | |
| A | CH - A - 207 903 (HASLER) <br> * Fig. 1,2 * | 4,6,7 | |
| A | DE - A1 - 2 715 465 (KRAMATORSKIJ) <br> * Fig. 1 * | | |

| TECHNICAL FIELDS SEARCHED (Int Cl 4) |
|---|
| B 23 K 7/00 |
| B 23 K 9/00 |
| B 23 K 37/00 |
| B 25 J 15/00 |
| F 16 H 25/00 |
| F 16 H 55/00 |

The present search report has been drawn up for all claims

| Place of search | Date of completion of the search | Examiner |
|---|---|---|
| VIENNA | 09-09-1985 | BENCZE |